# EUROPEAN PATENT SPECIFICATION

(11) **EP 2 018 039 B1**
(45) Date of publication and mention of the grant of the patent: **11.05.2011**
(21) Application number: 08160707.9
(22) Date of filing: 18.07.2008
(51) Int. Cl.: H04N 1/23

(54) **Image forming apparatus and printer control method**
Bilderzeugungsvorrichtung und Druckersteuerungsverfahren
Appareil de formation d'image et procédé de contrôle de l'impression

(30) Priority: 19.07.2007 JP 2007187969; 06.06.2008 JP 2008149359
(43) Date of publication of application: 21.01.2009
(73) Proprietor: Ricoh Company, Ltd., Tokyo 143-8555 (JP)
(72) Inventor: Kaneko, Masaru, Tokyo 143-8555 (JP)
(74) Representative: Schwabe - Sandmair - Marx

(56) References cited:
- EP-A- 1 617 315
- US-A1- 2003 035 130
- US-A1- 2006 170 950
- US-A1- 2007 009 154
- US-A1- 2007 030 518
- US-B1- 6 516 421

## Description

### CROSS-REFERENCE TO RELATED APPLICATIONS

The present application claims priority to the entire contents of Japanese priority document 2007-187969 filed in Japan on July 19, 2007 and Japanese priority document 2008-149359 filed in Japan on June 6, 2008.

### BACKGROUND OF THE INVENTION

### 1. Field of the Invention

The present invention relates to a technology for forming an image, and more particularly, a technology for controlling a print process by detecting residual print data to be printed.

### 2. Description of the Related Art

An image forming apparatus employing an electrophotographic system receives print data, and converts the print data into page description language (PDL) format data, or the like. The image forming apparatus then sends the converted data to a printer engine unit that performs image forming by an electrophotographic process, and performs printing of the data in units of page. The image forming apparatus can be an ordinary printer, a network printer, or a multifunction peripheral (MFP).

Upon receiving image data, the image forming apparatus notifies a print request to the printer engine unit. The printer engine unit receives the print request, and then drives each relevant unit included in the image forming apparatus, thereby printing out the data. If the printer engine unit does not receive the next print request, the printer engine unit performs an operation of ending the electrophotographic process, such as neutralizing or cleaning of a photosensitive element, at a predetermined timing, and then the image forming apparatus stops its operation.

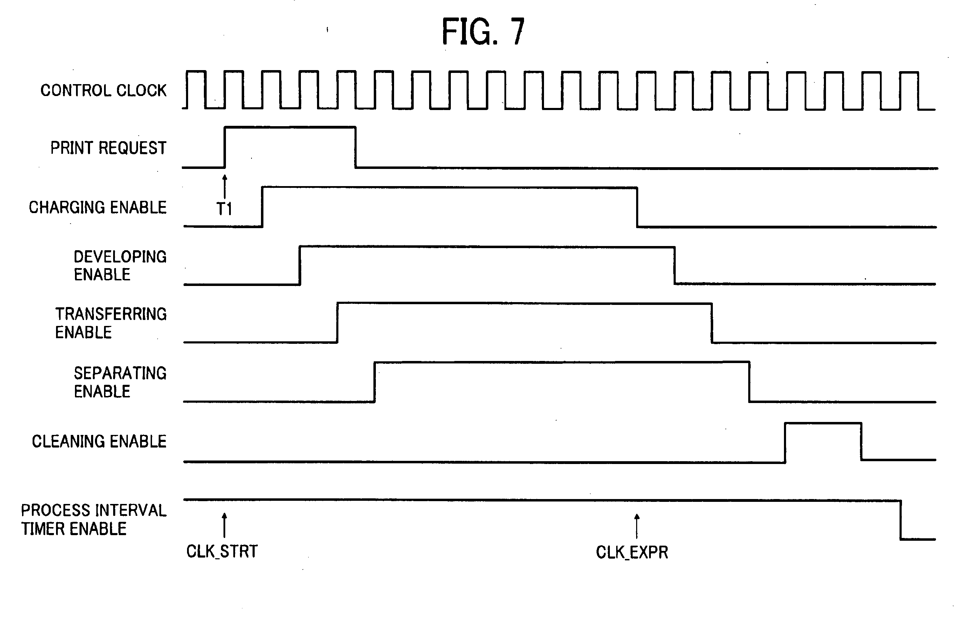

Fig. 7 is a timing chart for explaining control of an ending sequence for ending an electrophotographic process in a conventional image forming apparatus. The operation of the image forming apparatus is controlled by a control clock. The image forming apparatus receives a print request and corresponding job data and starts a setup sequence at time T1. Simultaneously, the image forming apparatus asserts a process-interval timer enable signal at CLK_STRT, thereby starting to count a process interval.

Generally, the process interval is set such that it is sufficient to print out the whole page data of a document mainly containing characters, such as a word processor document. Therefore, upon reaching CLK_EXPR that is time at which the process interval ends, the image forming apparatus starts the ending sequence to switch to a standby mode or an energy saving mode, and then the image forming apparatus stands by for the next job.

In the conventional image forming apparatus, once the image forming apparatus starts the ending sequence, the image forming apparatus cannot start a printing operation until the ending process is finished. In other words, even if the image forming apparatus receives the next print request, it cannot respond to that print request if it is executing the ending sequence. As a result, productivity of the printing process is extremely lowered.

In recent years, a processing speed of a central processing unit (CPU) that performs image processing has been improved, and at the same time, a memory capacity has been increased. However, image data to be processed includes high-resolution, detailed, and color image, so that a processing speed of an interpreter that converts raster data acquired from a scanner into the PDL format data or the like cannot catch up with the improvement of hardware performance of the image forming apparatus.

An operation speed (the number of pages per minute (PPM)) of the printer engine unit has been also improved. Therefore, in the case of processing large-capacity image data, the printer engine unit ends up with terminating a print process of print data received with a print request, before a control unit prepares the next print data to be printed out, resulting in an intermittent operation of the printer machine.

To cope with the above intermittent operation, for example, Japanese Patent Application Laid-open No. 2007-65413 discloses a technology for controlling a fixing heater in response to required time for preparing print data. In addition, Japanese Patent No. 3229621 proposes a method of preventing a decrease of print duty cycle due to a processing time for expanding an image by a controller, aiming at extending the lifetime of the apparatus. Furthermore, Japanese Patent Application Laid-open No. 2000-6497 discloses a printing apparatus including a host device and a printer, where the host device performs an energy saving control of components of the printer.

However, although Japanese Patent Application Laid-open No. 2007-65413 discloses a method of controlling the fixing heater in an appropriate manner even when the intermittent operation occurs, it does not provide a measure to solve the problem of intermittent operation itself.

Japanese Patent No. 3229621 discloses a system in which a sequence control unit stacks print start requests, and if conditions are met, performs a continuous printing operation for extending the lifetime of the apparatus. However, stacking the print start requests may cause a drop of an output of the first page (the first print). Moreover, in the case of large-sized image data that requires long time to be expanded, because the printing operation is performed page by page, the intermittent operation can occur depending on printing timing, resulting in a poor productivity.

In the printing apparatus disclosed in Japanese Patent Application Laid-open No. 2000-6497, if there is no need to drive a printer engine in the printer because print data contains a single color of white, control data is generated and sent to the printer to turn off a fixing heater in the printer engine during printing operation of the print data. However, in this technology, with an increase of the printing speed, a trade-off relation occurs between the reheating time of the fixing heater and the printing speed.

US 2007/009154 A1 shows an image forming apparatus comprising a control circuit which is configured to determine a switching time for switching into a power-saving mode taking into account function information of an operation performed within a predetermined period. This document therefore teaches to use time information relating to a previous print job to determine the time laps before initiation of the power-saving mode.

EP-A-1 617 315 shows an image forming apparatus comprising a detecting unit which detects a user interaction. A sleep interval-setting unit reads data stored at a memory which relates to the user interaction and defines a sleep interval based on that data. That document therefore teaches to base a laps time before initiation of an end procedure on the point of time of a user interaction.

US 2003/035130 A1 teaches to use a command signal which relates to the indication of a new print job for determining whether a printer should remain in the ready state.

In the image forming apparatus employing an electrophotographic system, if the fixing heater is turned off during a print sequence, the fixing heater needs to be instantly reheated to a preset temperature such that fixing can be performed. As a result, a thermal load is applied to a fixing roller, and energy saving is not sufficiently achieved.

In an image forming apparatus employing an inkjet system, there is little need for the energy saving of a fixing heater, or the like. However, an ending sequence for ending an image forming process includes processes of retracting and cleaning a nozzle. Therefore, there are problems that a load is applied to a relevant unit, which can shorten lifetime of the relevant unit.

### SUMMARY OF THE INVENTION

It is an object of the present invention to at least partially solve the problems in the conventional technology.

According to an aspect of the present invention, there is provided an image forming apparatus that receives print data from outside, and prints out received print data as a printed matter. The image forming apparatus includes a printer control unit that converts the received print data into job data that can be printed on a recording medium; and an engine control unit that receives the job data from the printer control unit, performs a printing operation corresponding to the job data, and upon finishing the printing operation, starts an ending sequence for ending an image forming process, wherein upon finishing the printing operation, the engine control unit determines whether the printer control unit is in processing next print data to be printed out, and if it is determined that the printer control unit is in processing the next print data, maintains a printing status without starting the ending sequence.

According to another aspect of the present invention, there is provided a printer control method including receiving print data from outside and printing out received print data as a printed matter. The printer control method includes converting the received print data into job data that can be printed on a recording medium; and receiving the job data from the printer control unit and performing a printing operation corresponding to the job data; upon finishing the printing operation, determining whether next print data is being processed at the converting, if next print data is not being processed at the converting, then starting an ending sequence for ending an image forming process, and if next print data is being processed at the converting, then maintaining a printing status without starting the ending sequence.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic diagram of an image forming apparatus according to an embodiment of the present invention;
Fig. 2 is a block diagram for explaining a functional configuration of the image forming apparatus;
Fig. 3 is a block diagram of a processing module of a printer control unit and an engine control unit of the image forming apparatus;
Fig. 4 is a flowchart of an image forming process performed by the image forming apparatus;
Fig. 5 is a flowchart of a process of starting an ending sequence by the engine control unit;
Fig. 6 is a timing chart for explaining a control sequence of the engine control unit; and
Fig. 7 is a timing chart for explaining control of an ending sequence in a conventional image forming apparatus.

### DETAILED DESCRIPTION OF THE PREFERRED EMBODIMENTS

Exemplary embodiments of the present invention are explained in detail below with reference to the accompanying drawings. The present invention is not limited to the embodiments described below.

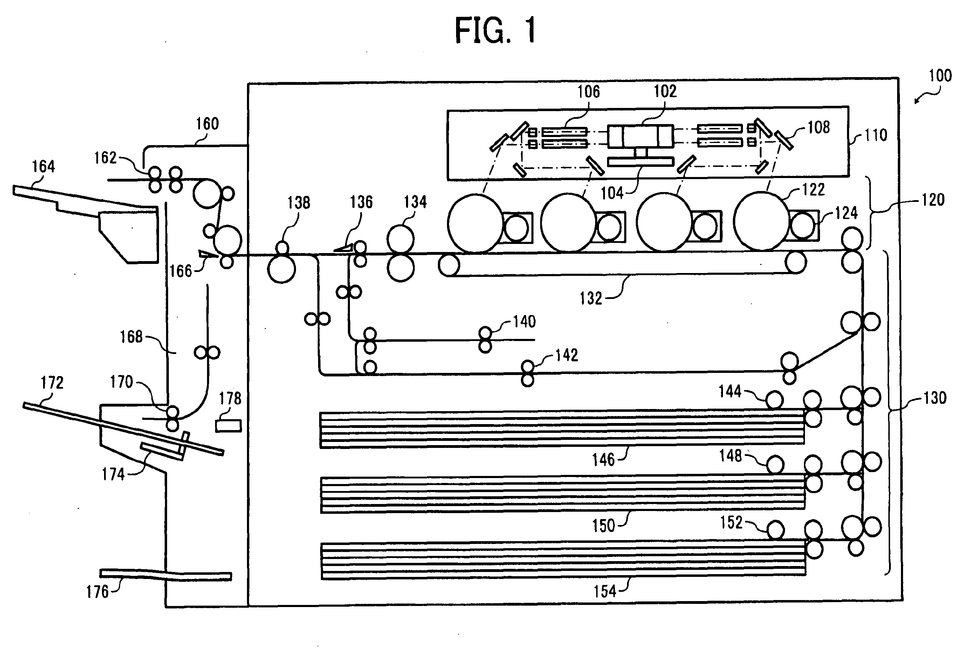

Fig. 1 is a schematic diagram of an image forming apparatus 100 according to an embodiment of the present invention. The image forming apparatus 100 can be configured as a multifunction full-color digital copier, a color laser printer, and the like. When the image forming apparatus 100 is configured as the multifunction full-color digital copier, the image forming apparatus 100 includes an image scanning unit including an automatic document feeder (ADF), a facsimile processing unit, an operation input unit, and the like. When the image forming apparatus 100 is configured as the color laser printer, the image forming apparatus 100 includes a parallel interface, such as an IEEE 1294 or a universal serial bus (USB), a serial bus interface, a network interface for connecting to Ethernet (registered trademark), and the like. The image forming apparatus 100 performs an image forming process by using a printer job language (PJL) or the like.

The image forming apparatus 100 includes an optical unit 110, an image forming unit 120, and a transfer/fixing unit 130. The optical unit 110 includes a polygon mirror 102, a plurality of fθ lenses 106, and a plurality of reflecting mirrors 108. The polygon mirror 102 is mounted on a motor 104. The motor 104 drives the polygon mirror 102 at a rotation speed of several thousands to several tens of thousands revolutions per minute (rpm). A light beam from a light source (not shown), such as a laser diode, is reflected by the polygon mirror 102, and is then projected through the fθ lens 106. The light beam is then reflected toward the image forming unit 120 by the reflecting mirror 108 through an optical system (not shown) such as a wide-type (WT) lens.

The image forming unit 120 includes four photosensitive drums 122 and four developing devices 124 corresponding to colors of cyan (C), magenta (M), yellow (Y), and black (K). The developing devices 124 contain developers of the four colors, and each of the developing devices 124 includes a developing sleeve, a developing blade, and the like. After a charging device (not shown), such as a charging roller, applies a static charge to the photosensitive drums 122, the photosensitive drums 122 are irradiated with a plurality of light beams from a multibeam light source (not shown) in an image pattern, so that an electrostatic latent image is formed on each of the photosensitive drums 122.

The electrostatic latent images formed on the photosensitive drums 122 are exposed to the developing devices 124 in accordance with rotation of the photosensitive drums 122. The developing devices 124 develop the electrostatic latent images by using the developers, so that a developed image (toner image) is formed on each of the photosensitive drums 122. The toner images are conveyed to the transfer/fixing unit 130 in accordance with rotation of the photosensitive drum 122. The transfer/fixing unit 130 is configured with a conveying belt 132 and a feeding unit including a plurality of feeding cassettes 146, 150, 154, a plurality of conveying rollers 144, 148, 152, and the like. Each of the feeding cassettes 146, 150, 154 contains a recording medium such as a printing paper or an OHP transparency, which is conveyed to the conveying belt 132 by a plurality of rollers including the conveying rollers 144, 148, and 152.

The toner images formed on the photosensitive drums 122 are transferred onto the recording medium that is electrostatically attached to the conveying belt 132 by a transfer bias potential. Toner images of the four colors are transferred onto the recording medium in a superimposed manner, so that a full-color image is formed on the recording medium, and is then fixed to the recording medium by a fixing device 134. The recording medium on which the full-color image is formed is then discharged to a discharge tray 164. If required, duplex printing is performed by a duplex printing unit that includes a separating claw 136, and inverted-medium conveying members 140 and 142. Afterward, the recording medium is discharged out of the image forming apparatus 100 via a finisher 160 that includes a plurality of rollers including a conveying roller 162 and a switching plate 166.

The finisher 160 guides the recording medium conveyed by a discharging unit 138 toward the conveying roller 162 or a staple stage 172, so that the recording medium is output as a final printed material for a user. When the switching plate 166 is turned upward, the recording medium is discharged to the discharge tray 164 via the conveying roller 162. On the contrary, when the switching plate 166 is turned downward, the recording medium is conveyed to the staple stage 172 via conveying rollers 168 and 170, and then a staple process is performed on the recording medium. Every time the recording medium is discharged to the staple stage 172, the recording medium is aligned at its edge by a sheet aligning jogger 174 on the staple stage 172. When copying of a set of recording media is completed, the recording media are stapled by a stapler 178. The recording media stapled by the stapler 178 drop down onto a stapled-media discharge tray 176 by gravity.

Although the image forming apparatus 100 shown in Fig. 1 is explained as an exemplary embodiment, the image forming apparatus according to the present invention can be configured as other types of image forming apparatuses, such as a page printer, a network printer, or the like. Furthermore, the image forming apparatus 100 can be configured as a black and white printer as well as a full-color image forming apparatus.

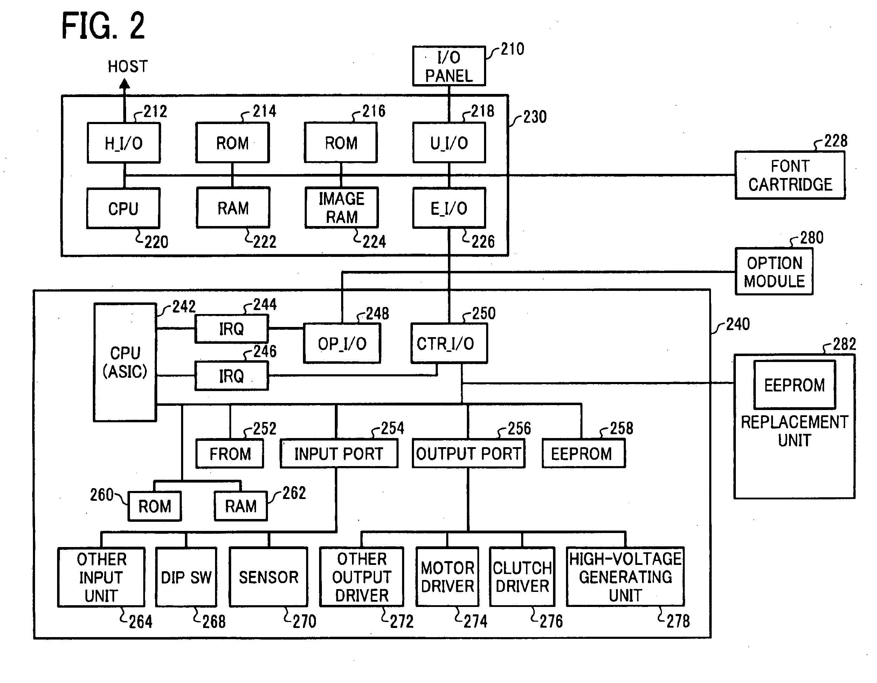

Fig. 2 is a block diagram for explaining a functional configuration of the image forming apparatus 100. The image forming apparatus 100 receives print data from an information processing apparatus (not shown) serving as a host device, and prints out the print data. A function block 200 of the image forming apparatus 100 includes a printer control unit 230 and an engine control unit 240.

The printer control unit 230 receives print data from the information processing apparatus, and generates job data from the print data. The printer control unit 230 sends a print request and the job data to the engine control unit 240. The engine control unit 240 receives the print request and the job data, and then drives the light source, the polygon mirror 102, the photosensitive drums 122, various drive motors including the motor 104, and other relevant units in a synchronized manner based on the job data, so that an image is formed on a recording medium based on the job data.

The printer control unit 230 includes an H_I/O 212 that is configured as an interface such as IEEE 1294 or USB, which is arranged between the printer control unit 230 and the information processing apparatus to receive print data from the information processing apparatus. The print data can be written in a PDL such as PostScript (registered trademark). The printer control unit 230 includes a CPU 220, a random access memory (RAM) 222, an image RAM 224, and two read-only memories (ROMs) 214 and 216. The RAM 222 provides an execution space for the CPU 220. The image RAM 224 is used for buffering print data. The ROMs 214 and 216 store therein a computer program and a set condition for the printer control unit 230 to perform an operation. The computer program and data stored in the ROMs 214 and 216 are read by the CPU 220 when the image forming apparatus 100 is turned on, and are used for a subsequent process.

The printer control unit 230 includes a U_I/O 218 as a user interface. The printer control unit 230 obtains user settings from an I/O panel 210 via the U_I/O 218, so that it is possible to specify print settings, or the like, of the image forming apparatus 100. The printer control unit 230 includes an E_I/O 226 as an interface to send a print request and corresponding job data to the engine control unit 240. The job data generated by the printer control unit 230 is sent with a print request to the engine control unit 240 via the E_I/O 226. Upon receiving print data, the printer control unit 230 identifies image and font data, and then performs a conversion process corresponding to the received image and font data to generate job data. The printer control unit 230 then sends the generated job data to the engine control unit 240.

The operation of the engine control unit 240 is controlled by a CPU (ASIC) 242. The CPU 242 includes an IRQ 246 for processing an interrupt from the printer control unit 230 and an IRQ 244 for processing interrupts from an OP_I/O 248 and an option module 280, and controls processing in response to interrupt requests from the printer control unit 230 and the option module 280.

The CPU 242 includes a data line for receiving job data and a plurality of ports including I/O_in and I/O_out for receiving various control signals, as well as an interrupt signal. The CPU 242 can control a printer engine (not shown) under the control of the printer control unit 230. The CPU 242 reads a computer program and setting data required for performing a process from a ROM 260, and obtains an execution space in a RAM 262 to perform the process. The engine control unit 240 includes a flash ROM (FROM) 252, an electrically erasable and programmable read-only memory (EEPROM) 258, and the like, so that the engine control unit 240 can write and correct various settings. Furthermore, a control signal is input from other input units 264, a DIP SW 268, a sensor 270, and the like, to the CPU 242 via an input port 254, so that the operation of the CPU 242 is controlled based on the control signal.

Upon receiving a print request from the printer control unit 230, the CPU 242 controls a motor driver 274, a clutch driver 276, a high-voltage generating unit 278, other output drivers 272 including an optical driver (not shown), and the like, to operate the printer engine, thereby performing an image forming process. The engine control unit 240 includes an EEPROM 282 as a replacement unit, so that various data and computer programs can be updated.

In the image forming apparatus 100, the printer control unit 230 notifies the engine control unit 240 whether the printer control unit 230 has job data to be output. Each driver in the engine control unit 240 is controlled based on whether there are residual print data to be output in the printer control unit 230.

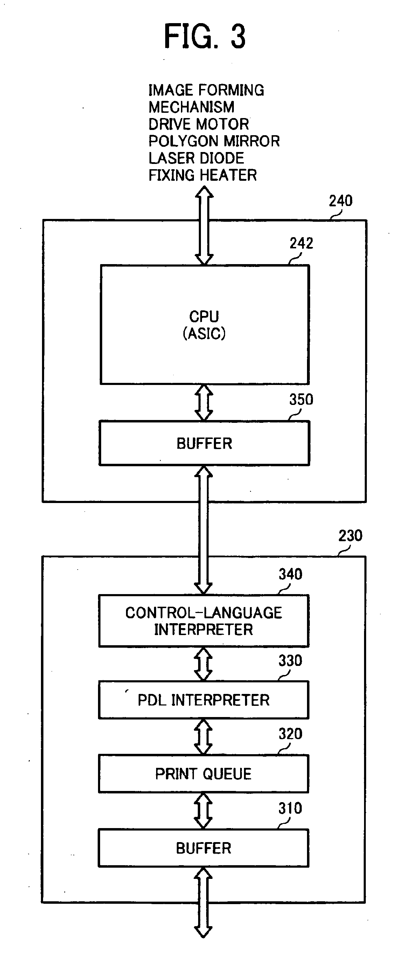

Fig. 3 is a block diagram of a processing module of the printer control unit 230 and the engine control unit 240 according to the embodiment. The printer control unit 230 receives PDL format print data from the information processing apparatus via a bus such as USB, and then generates job data that is written in a printer control language. The printer control unit 230 then sends the job data with a print request to the engine control unit 240. Specifically, upon receiving the print data, the printer control unit 230 stores the print data in a buffer 310, and registers the print data in a print queue 320 by each print job. The print data registered in the print queue 320 is read and converted in the printer control language by a PDL interpreter 330. The converted print data is then converted to job data by a control-language interpreter 340. The job data is sent together with a print request to the engine control unit 240 instantly. Alternatively, the job data is sent to the engine control unit 240 at an appropriate timing after a print request is sent to the engine control unit 240.

When either or both of the PDL interpreter 330 and the control-language interpreter 340 are activated, the printer, control unit 230 sets a print-data in-process flag in an appropriate register memory. The printer control unit 230 asserts a level of an appropriate output port among I/O ports of the CPU 220 until the register memory is eliminated in accordance with ending of a conversion process of the print data. "Assert" means to set a signal level for executing a control using a value of the output port, which is not limited to a specific output level of the output port. A control signal from the output port is sent to a control unit I/O (CTR_I/O) 250 in the engine control unit 240, and then sent to the CPU 242 via the IRQ 246, thereby causing the CPU 242 to control starting of an ending sequence.

Upon receiving the job data, the engine control unit 240 stores the job data in a buffer 350, and controls the light source, the drive motors, and the like, in a synchronized manner under the control of the CPU 242, thereby performing an image forming process. In a conventional method, if the engine control unit 240 receives a print request, each driver is enabled during a predetermined process interval. When the process interval ends, each driver is disabled in accordance with a specific ending sequence.

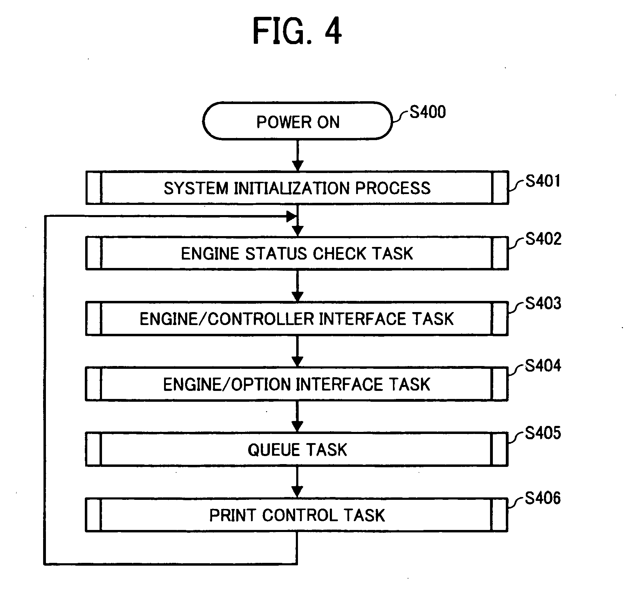

Fig. 4 is a flowchart of an image forming process performed by the image forming apparatus 100. A power source (not shown) is turned on to start the image forming process at Step S400. A system initialization process is performed at Step S401. Then, an engine status check task is performed at Step S402 to detect a status of the print engine, and perform initialization.

An engine/controller interface task is performed at Step S403 to detect a status of an engine/controller interface, and perform various settings. An engine/option interface task is performed at Step S404 to detect a status of an engine/option interface, and perform initialization. Afterward, a queue task is performed at Step S405 to register print job in the print queue 320 in response to a print request from the information processing apparatus. Then, a print control task is performed at Step S406 to perform a print process.

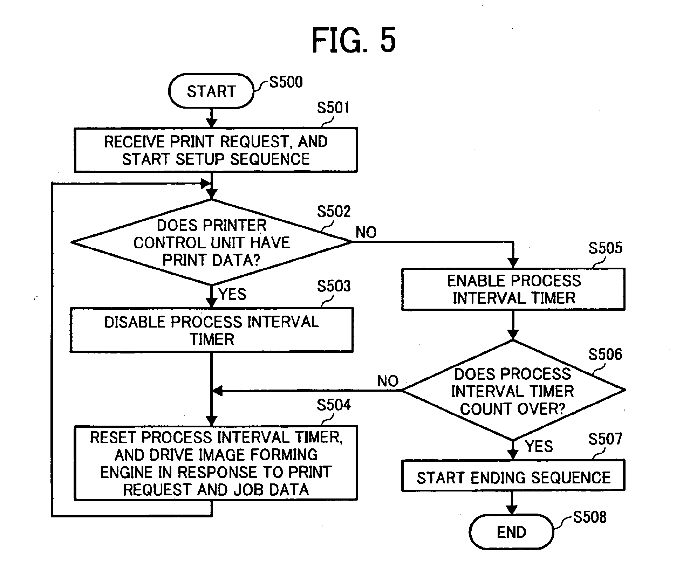

Fig. 5 is a flowchart of a process of starting an ending sequence by the engine control unit 240.

In the conventional technology as described above, if it requires long time to convert print data into job data, and the next print request and the job data are sent after the process interval ends, the ending sequence is started prior to a print job in response to the print request. As a result, the print job cannot be started until the ending sequence and the setup sequence are completed.

On the contrary, the image forming apparatus 100 controls a start timing of the ending sequence of the engine control unit 240 by determining whether the printer control unit 230 has print data to be sent to the engine control unit 240. The process of starting the ending sequence starts at Step S500. The engine control unit 240 receives a print request, and starts the setup sequence at Step S501. It is determined whether the printer control unit 230 has print data to be printed out and is in processing the print data at Step S502.

Such determination can be performed by determining whether a level of an output port is asserted, which indicates that the CPU 220 of the printer control unit 230 is in processing image data, by the engine control unit 240 detecting a level of the output port, or by the engine control unit 240 detecting an interrupt from the printer control unit 230. If the printer control unit 230 has print data to be printed out (Yes at Step S502), the process control proceeds to Step S503 to disable a process interval timer. At Step S504, if the process interval timer is started (if the process-interval timer enable signal is asserted), the process interval timer is reset, and if the process interval timer is not started, the process interval timer maintains a disabled state. Then, an image forming engine (not shown) including a relevant unit is driven in response to the next print request and corresponding job data, so that a printing operation is performed.

Afterward, the process control proceeds to Step S502 to determine whether the printer control unit 230 has print data to be printed out. The processes from Step S502 to Step S504 are repeated until the printer control unit 230 has no print data, i.e., until the operations of both the PDL interpreter 330 and the control-language interpreter 340 are stopped.

If the printer control unit 230 has no print data, i.e., the operations of both the PDL interpreter 330 and the control-language interpreter 340 are stopped (No at Step S502), the process control proceeds to Step S505 to enable the process interval timer, so that the process interval timer is started. Then, it is determined whether the process interval timer counts over at Step S506. If the process interval timer counts over (Yes at Step S506), the process control proceeds to Step S507 to start the ending sequence.

The ending sequence is started by activating an assembler program that is installed as firmware for the CPU 242. The ending sequence includes a process performed by sequentially negating enable signals to turn off a charging sequence, a developing sequence, a transferring sequence, a separating sequence, and a cleaning sequence in accordance with a set procedure. If the ending sequence started at Step S507 ends, the process control proceeds to Step S508 in which the engine control unit 240 causes the image forming engine to switch to the energy saving mode, and stands by for the next print request and corresponding job data.

If the process interval timer does not count over (No at Step S506), the process control proceeds to Step S504 to perform processing on a print request and corresponding job data received before the process interval timer counts over. Thus, the process interval timer is prevented from ending as long as the printer control unit 230 has print data, and starting of the ending sequence of the engine control unit 240 is controlled based on whether the PDL interpreter 330 and the control-language interpreter 340 is performing the conversion process.

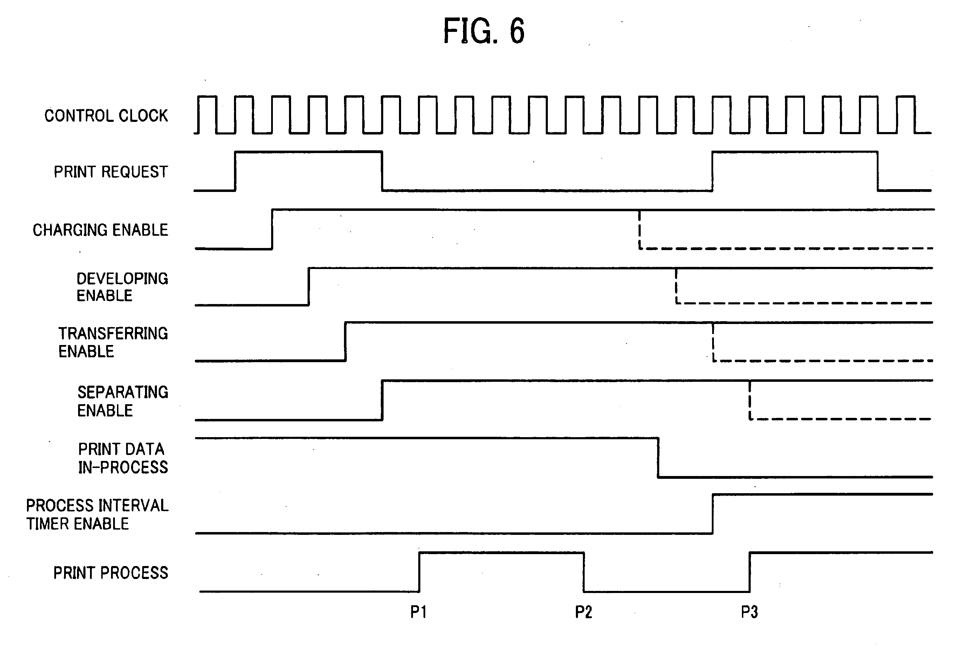

Fig. 6 is a timing chart for explaining a control sequence of the engine control unit 240. The engine control unit 240 is controlled by a control clock in a synchronized manner, and receives a print request and corresponding job data in synchronization with the control clock. Upon receiving the print request and the job data, the engine control unit 240 sequentially asserts a charging enable signal for the charging sequence, a developing enable signal for the developing sequence, a transferring enable signal for the transferring sequence, and a separating enable signal for the separating sequence in accordance with a set sequence, so that a return sequence is performed to return from the energy saving mode.

When the return sequence is completed, the job data corresponding to the print request is sent to the light source at an image-forming start time P1, and switching on/off of the light source is controlled. A conveying motor (not shown) is driven in synchronization with writing operation performed by the light source in the main scanning direction. The image forming engine performs an image forming process that includes a latent-image forming process, a developing process, a transferring process, a cleaning process, a fixing process, and a discharging process. The image forming engine then finishes printing of the currently obtained job data at time P2.

In the embodiment, even if there is no data to be sent to the image forming engine at time P2, a control signal is asserted, which indicate that the printer control unit 230 is in processing print data. The engine control unit 240 does not assert a process-interval timer enable signal even when the engine control unit 240 has no job data, and therefore the engine control unit 240 does not start the ending sequence performed by controlling each of the enable signals in such a manner as shown in a broken line in Fig. 6. As a result, the image forming engine maintains a process printing status, i.e., an image forming status, so that the image forming engine can promptly perform image forming in response to the next print request and corresponding job data even if it requires long time for the PDL interpreter 330 and the control-language interpreter 340 to convert the print data into the job data.

When it is determined that the printer control unit 230 does not have print data, the control signal indicating that the printer control unit 230 is in processing print data is negated. Afterward, when the engine control unit 240 receives the last print request and data on the last page, the engine control unit 240 can start printing in a smooth manner without starting the setup sequence at time P3.

In the embodiment, as shown in Fig. 6, because the control signal indicating that the printer control unit 230 is in processing print data is negated, the process-interval timer enable signal is asserted in synchronization with the last print request corresponding to the printing performed at the point P3, and the process interval timer starts to count by the control clock. When the process interval timer has counted over the predetermined number, the ending sequence is started, and the image forming engine switches to the energy saving mode.

In another embodiment, if the printer control unit 230 has image data to be printed out, if the engine control unit 240 does not receive the next print request and corresponding job data from the printer control unit 230 within predetermined time-out duration, the engine control unit 240 can perform a time-out process. In this situation, the ending process is performed in accordance with the end of the time-out duration. With this configuration, it is possible to reduce unnecessary operation in an abnormal state in which there occurs hung-up in the information processing apparatus, troubles in the printer control unit 230, or the like. Thus, the lifetime of a processing element of the image forming engine can be extended.

A time-out timer can be set to an appropriate time, and the set time can be stored in the ROM, or the like. Thus, the lifetime of the image forming apparatus can be optimized. Furthermore, in another embodiment, the printer control unit 230 obtains maximum likelihood estimation time at which the next print request is issued based on log data, and notifies the maximum likelihood estimation time to the engine control unit 240. The engine control unit 240 receives the maximum likelihood estimation time whereby the engine control unit 240 controls a setting time of the time-out timer, so that a period during which the printing status is maintained can be optimized.

In another embodiment, a user can set a mode to select whether to make an inquiry about the control signal indicating that the printer control unit 230 has print data at a timing at which the ending process is to be started. Thus, a process to the energy saving mode of the image forming apparatus can be selectively set in accordance with user's purposes.

In the image forming apparatus and the printer control method as described above, if the efficiency of the interpreter is decreased due to characteristics of print data during operation of converting the print data into printer control language format data, it is possible to prevent the image forming apparatus from switching to the energy saving mode while there remains the print data to be printed out. Thus, the image forming process can be effectively performed.

Furthermore, frequent switching operation between the energy saving mode and the printing mode is prevented, so that it is possible to reduce a mechanical stress and a thermal stress applied to an optical element, a mechanical element, and a fixing element, and to extend the lifetime of the image forming engine.

Although the image forming apparatus employing the electrophotographic system is explained in the above description, the method according to the embodiment can be applied to an inkjet printer that conveys a transfer sheet at a constant speed, forms an image by each line in a direction perpendicular to a conveying direction of the transfer sheet, and performs a specific ending sequence.

The present invention is not limited to the above embodiments. Various modifications can be made to the embodiments, and the modifications are included in the scope of the present invention as long as they produce effects that are achieved according to the embodiments of the present invention.

According to an aspect of the present invention, an image forming apparatus and a printer control method can be provided in which it is possible to prevent time lag in starting the next print operation, to achieve energy saving, and to extend the lifetime of an image forming engine.

## Claims

1. An image forming apparatus that receives print data from outside, and prints out received print data as a printed matter, the image forming apparatus comprising:
a printer control unit (230) that converts the received print data into job data that can be printed on a recording medium;
a process interval timer that counts a time signal if the printer control unit (230) is not processing print data; and
an engine control unit (240) that receives the job data from the printer control unit (230), performs a printing operation corresponding to the job data, and upon finishing the printing operation, starts an ending sequence for ending an image forming process after the process interval timer counts over, wherein
upon finishing the printing operation, the engine control unit (240) determines whether the printer control unit (230) is in processing of next print data to be printed out , and if it is determined that the printer control unit (230) is in processing of the next print data, maintains a printing status without starting the ending sequence.

2. The image forming apparatus according to claim 1, wherein when it is determined that the printer control unit (230) is in processing the print data, if next job data corresponding to the next print data is not received from the printer control unit (230) within a predetermined period, the engine control unit (240) starts the ending sequence.

3. The image forming apparatus according to claim 2, wherein the engine control unit (240) obtains maximum likelihood estimation time to receive the next job data, and controls starting of the ending sequence based on the maximum likelihood estimate time.

4. The image forming apparatus according to any one of claims 1 to 3, wherein the image forming apparatus is an electrophotographic image forming apparatus.

5. The image forming apparatus according to any one of claims 1 to 3, wherein the image forming apparatus is an inkjet-type image forming apparatus.

6. A printer control method including receiving print data from outside and printing out received print data as a printed matter, the printer control method comprising:
converting the received print data into job data that can be printed on a recording medium;
counting a time signal using a process interval timer if print data is not being converted into job data; and
receiving the job data from the printer control unit (230) and performing a printing operation corresponding to the job data;
upon finishing the printing operation, determining whether next print data is being processed at the converting step, if next print data is not being processed at the converting step, then , after the process interval timer counts over, starting an ending sequence for ending an image forming process, and if next print data is being processed at the converting step, then maintaining a printing status without starting the ending sequence.

7. The printer control method according to claim 6, wherein when it is determined at the determining that the next print data is being processed at the converting, and if next job data corresponding to the next print data is not received at the receiving within a predetermined period, then starting the ending sequence.

8. The printer control method according to claim 7, further comprising
obtaining maximum likelihood estimation time to receive the next job data; and
controlling starting of the ending sequence based on the maximum likelihood estimate time.

9. The printer control method according to any one of claims 6 to 8, wherein the printer control method is implemented on an electrophotographic image forming apparatus.

10. The printer control method according to any one of claims 6 to 8, wherein the printer control method is implemented on an inkjet-type image forming apparatus.

## Patentansprüche

1. Bilderzeugungsvorrichtung, die Druckdaten von außerhalb erhält bzw. empfängt und erhaltene bzw. empfangene Druckdaten als eine Drucksache bzw. ein Druckerzeugnis ausdruckt, wobei die Bilderzeugungsvorrichtung aufweist:
eine Druckersteuereinheit bzw. Druckerregeleinheit (230), die die erhaltenen bzw. empfangenen Druckdaten in Auftragsdaten konvertiert bzw. umwandelt, die auf ein Aufzeichnungsmedium gedruckt werden können;
ein Prozessintervallzeitgeber bzw. -taktgeber, der ein Zeitsignal zählt, wenn die Druckersteuereinheit bzw. Druckerregeleinheit (230) Druckdaten nicht verarbeitet; und
eine Apparatsteuereinheit bzw. Apparatregeleinheit (240), die die Auftragsdaten von der Druckersteuereinheit bzw. Druckerregeleinheit (230) erhält bzw. empfängt, einen Druckvorgang entsprechend den Auftragsdaten ausführt und nach dem Beenden des Druckvorgangs eine Beendigungssequenz zum Beenden eines Bilderzeugungsprozesses startet, nachdem der Prozessintervallzeitgeber bzw. -taktgeber nachgezählt hat, wobei
nach dem Beenden des Druckvorganges die Apparatsteuereinheit bzw. Apparatregeleinheit (240) bestimmt, ob die Druckersteuereinheit bzw. Druckerregeleinheit (230) beim Verarbeiten von den nächsten auszudruckenden Druckdaten ist, und falls es bestimmt wird, dass die Druckersteuereinheit bzw. Druckerregeleinheit (230) beim Verarbeiten der nächsten Druckdaten ist, einen Druckstatus beibehält, ohne die Beendigungssequenz zu starten.

2. Bilderzeugungsvorrichtung gemäß Anspruch 1, wobei wenn es bestimmt wird, dass die Druckersteuereinheit bzw. Druckerregeleinheit (230) beim Verarbeiten der Druckdaten ist, falls die nächsten Auftragsdaten, die den nächsten Druckdaten entsprechen, nicht von der Druckersteuereinheit bzw. Druckerregeleinheit (230) innerhalb einer vorherbestimmten Periode bzw. Zeitdauer erhalten bzw. empfangen werden, die Apparatsteuereinheit bzw. Apparatregeleinheit (240) die Beendigungssequenz startet.

3. Bilderzeugungsvorrichtung gemäß Anspruch 2, wobei die Apparatsteuereinheit bzw. Apparatregeleinheit (240) eine maximale Wahrscheinlichkeitsschätzungszeitdauer erlangt, um die nächsten Auftragsdaten zu erhalten bzw. zu empfangen, und das Starten der Beendigungssequenz steuert bzw. regelt, basierend auf der maximalen Wahrscheinlichkeitsschätzungszeitdauer.

4. Bilderzeugungsvorrichtung gemäß irgendeinem der Ansprüche 1 bis 3, wobei die Bilderzeugungsvorrichtung eine elektrophotographische Bilderzeugungsvorrichtung ist.

5. Bilderzeugungsvorrichtung gemäß irgendeinem der Ansprüche 1 bis 3, wobei die Bilderzeugungsvorrichtung eine Bilderzeugungsvorrichtung des Tintenstrahltyps ist.

6. Druckersteuerungsverfahren bzw. Druckerregelungsverfahren, das das Erhalten bzw. Empfangen von Druckdaten von außerhalb und Ausdrucken erhaltener bzw. empfangener Druckdaten als eine Drucksache bzw. Druckerzeugnis enthält, wobei das Druckersteuerungsverfahren bzw. Druckerregelungsverfahren Folgendes aufweist:
Konvertieren bzw. Umwandeln der erhaltenen bzw. empfangenen Druckdaten in Auftragsdaten, die auf ein Aufzeichnungsmedium gedruckt werden können;
Zählen eines Zeitsignals, wobei ein Prozessintervallzeitgeber bzw. -taktgeber verwendet wird, falls die Druckdaten nicht in Auftragsdaten konvertiert bzw. umgewandelt sind; und
Erhalten bzw. Empfangen der Auftragsdaten von der Druckersteuerungseinheit bzw. Druckerregelungseinheit (230) und Ausführen eines Druckvorgangs entsprechend den Auftragsdaten;
nach dem Beenden des Druckvorgangs bestimmen, ob die nächsten Druckdaten in dem Konvertierungsschritt bzw. Umwandlungsschritt verarbeitet sind, falls die nächsten Druckdaten nicht in dem Konvertierungsschritt bzw. Umwandlungsschritt verarbeitet sind, dann wird nachdem der Prozessintervallzeitgeber bzw. -taktgeber nachgezählt hat, eine Beendigungssequenz zur Beendigung eines Bilderzeugungsprozesses gestartet wird, und falls die nächsten Druckdaten in dem Konvertierungsschritt bzw. Umwandlungsschritt verarbeitet werden, dann wird ein Druckstatus beibehalten, ohne die Beendigungssequenz zu starten.

7. Druckersteuerungsverfahren bzw. Druckerregelungsverfahren gemäß Anspruch 6, wobei, wenn es in dem Bestimmen bestimmt wird, dass die nächsten Druckdaten bei dem Konvertieren bzw. Umwandeln verarbeitet werden, und falls die nächsten Auftragsdaten, die den nächsten Druckdaten entsprechen, nicht in dem Erhalten bzw. Empfangen innerhalb einer vorbestimmten Zeitdauer erhalten bzw. empfangen wurden, dann wird die Beendigungssequenz gestartet.

8. Druckersteuerungsverfahren bzw. Druckerregelungsverfahren gemäß Anspruch 7, das ferner aufweist:
Erlangen der maximalen Wahrscheinlichkeitsschätzungszeitdauer, um die nächsten Auftragsdaten zu erhalten bzw. zu empfangen; und
Steuern bzw. Regeln des Startens der Beendigungssequenz, basierend auf der maximalen Wahrscheinlichkeitsschätzungszeitdauer.

9. Druckersteuerungsverfahren bzw. Druckerregelungsverfahren gemäß irgendeinem der Ansprüche 6 bis 8, wobei das Druckersteuerungsverfahren bzw. Druckerregelungsverfahren in einer elektrophotographischen Bilderzeugungsvorrichtung durchgeführt wird.

10. Druckersteuerungsverfahren bzw. Druckerregelungsverfahren gemäß irgendeinem der Ansprüche 6 bis 8, wobei das Druckersteuerungsverfahren bzw. Druckerregelungsverfahren in einer Bilderzeugungsvorrichtung des Tintenstrahltyps durchgeführt wird.

## Revendications

1. Appareil de formation d'image qui reçoit des données d'impression de l'extérieur, et qui imprime les données d'impression reçues en tant qu'imprimé, l'appareil de formation d'image comprenant :
une unité de commande d'imprimante (230) qui convertit les données d'impression reçues en données de tâche qui peuvent être imprimées sur un support d'enregistrement ;
un registre d'horloge d'intervalle de traitement qui compte un signal de temps si l'unité de commande d'imprimante (230) n'est pas en train de traiter des données d'impression ; et
une unité de commande de moteur (240) qui reçoit les données de tâche de l'unité de commande d'imprimante (230), effectue une opération d'impression correspondant aux données de tâche, et à la fin de l'opération d'impression, débute une séquence de terminaison pour terminer un processus de formation d'image après le dépassement de comptage du registre d'horloge d'intervalle de traitement, dans lequel
à la fin de l'opération d'impression, l'unité de commande de moteur (240) détermine si l'unité de commande d'imprimante (230) est en train de traiter les données d'impression suivantes à imprimer, et s'il est déterminé que l'unité de commande d'imprimante (230) est en train de traiter les données d'impression suivantes, maintient un état d'impression sans débuter la séquence de terminaison.

2. Appareil de formation d'image selon la revendication 1, dans lequel, lorsqu'il est déterminé que l'unité de commande d'imprimante (230) est en train de traiter les données d'impression, si des données de tâche suivantes correspondant aux données d'impression suivantes ne sont pas reçues de l'unité de commande d'imprimante (230) dans une période prédéterminée, l'unité de commande de moteur (240) débute la séquence de terminaison.

3. Appareil de formation d'image selon la revendication 2, dans lequel l'unité de commande de moteur (240) obtient un temps d'estimation à maximum de vraisemblance pour recevoir les données de tâche suivantes, et commande le lancement de la séquence de terminaison sur la base du temps d'estimation à maximum de vraisemblance.

4. Appareil de formation d'image selon l'une quelconque des revendications 1 à 3, dans lequel l'appareil de formation d'image est un appareil de formation d'image électrophotographique.

5. Appareil de formation d'image selon l'une quelconque des revendications 1 à 3, dans lequel l'appareil de formation d'image est un appareil de formation d'image du type à jet d'encre.

6. Procédé de commande d'imprimante comprenant la réception de données d'impression de l'extérieur et l'impression des données d'impression reçues en tant qu'imprimé, le procédé de commande d'imprimante consistant à :
convertir les données d'impression reçues en données de tâche qui peuvent être imprimées sur un support d'enregistrement ;
compter un signal de temps en utilisant un registre d'horloge d'intervalle de traitement si les données d'impression ne sont pas converties en données de tâche ; et
recevoir les données de tâche de l'unité de commande d'imprimante (230) et effectuer une opération d'impression correspondant aux données de tâche ;
à la fin de l'opération d'impression, déterminer si les données d'impression suivantes sont en cours de traitement à l'étape de conversion, si les données d'impression suivantes ne sont pas en cours de traitement à l'étape de conversion, alors, après le dépassement de comptage du registre d'horloge d'intervalle de traitement, débuter une séquence de terminaison pour terminer un processus de formation d'image, et si les données d'impression suivantes sont en cours de traitement à l'étape de conversion, alors, maintenir un état d'impression sans débuter la séquence de terminaison.

7. Procédé de commande d'imprimante selon la revendication 6, dans lequel, lorsqu'il est déterminé à l'étape de détermination que les données d'impression suivantes sont en cours de traitement à l'étape de conversion, et si des données de tâche suivantes correspondant aux données d'impression suivantes ne sont pas reçues à l'étape de réception dans une période prédéterminée, alors, la séquence de terminaison est lancée.

8. Procédé de commande d'imprimante selon la revendication 7, consistant en outre à :
obtenir un temps d'estimation à maximum de vraisemblance pour recevoir les données de tâche suivantes ; et
commander le lancement de la séquence de terminaison sur la base du temps d'estimation à maximum de vraisemblance.

9. Procédé de commande d'imprimante selon l'une quelconque des revendications 6 à 8, dans lequel le procédé de commande d'imprimante est mis en oeuvre sur un appareil de formation d'image électrophotographique.

10. Procédé de commande d'imprimante selon l'une quelconque des revendications 6 à 8, dans lequel le procédé de commande d'imprimante est mis en oeuvre sur un appareil de formation d'image du type à jet d'encre.
